# EUROPÄISCHE PATENTSCHRIFT

(11) **EP 0 446 589 B1**
(45) Veröffentlichungstag und Bekanntmachung des Hinweises auf die Patenterteilung: **23.12.1998**
(21) Anmeldenummer: 91101099.9
(22) Anmeldetag: 29.01.1991
(51) Int. Cl.: H04L 12/18, H04L 12/56

(54) **Kopierfähige ATM-Vermittlungsstelle**
ATM switch with copy capability
Commutateur ATM avec capacité de duplication

(30) Priorität: 14.03.1990 DE 4008078
(43) Veröffentlichungstag der Anmeldung: 18.09.1991
(73) Patentinhaber: ALCATEL ALSTHOM COMPAGNIE GENERALE D'ELECTRICITE, 75008 Paris (FR)
(72) Erfinder: Schrodi, Karl, W-7258 Heimsheim (DE); Pfeiffer, Bodo, W-7141 Schwieberdingen (DE); Ellenberger, Gert, Dr., W-7312 Kirchheim (DE); Cesar, Bozo, W-7000 Stuttgart 40 (DE)
(74) Vertreter: Brose, Gerhard, Dipl.-Ing.

(56) Entgegenhaltungen:
- WO-A-87/00372
- DE-A- 3 816 747
- IEEE INFOCOM 88 März 1988, NEW ORLEANS, US Seiten 29 - 34; K. ENG ET AL: 'MULTICAST AND BROADCAST SERVICES IN A KNOCKOUT PACKET SWITCH'
- PATENT ABSTRACTS OF JAPAN vol. 5, no. 11 (E-42)23. Januar 1981 & JP-A-55 140 347 ( OKI DENKI KOGYO ) 1. November 1980
- PATENT ABSTRACTS OF JAPAN vol. 013, no. 053 (E-713)7. Februar 1989 & JP-A-63 246 055 ( NEC CORP ) 13. Oktober 1988

## Beschreibung

Die Erfindung betrifft eine kopierfähige ATM- Vermittlungsstelle zur Vermittlung von ATM-Zellen, nach dem Oberbegriff von Anspruch 1.

Eine solche ATM-Vermittlungsstelle ist bekannt aus WO 87/00372. Weiter ist auch bekannt eine Vermittlungsstelle mit einer Aufeinanderfolge aus Kopierkoppelfeld, Verteilkoppelfeld und Zielkoppelfeld.

Realer Betrieb ist eine Mischung aus Punkt-zu-Punkt-Verbindungen, Punkt-zu-Mehrpunkt-Verbindungen mit wenigen Verzweigungen und Punkt-zu-Mehrpunkt-Verbindungen mit vielen Verzweigungen. Der Gesamtverkehr und die einzelnen Anteile ändern sich laufend. Die bekannten Strukturen sind jeweils nur einseitig auf eine bestimmte Verkehrsart optimiert.

Der Erfindung liegt die Aufgabe zugrunde, eine kopierfähige ATM-Vermittlungsstelle anzugeben, die verschiedenartigen, auch wechselnden Verkehrsarten gleichermaßen angepaßt ist.

Die Aufgabe wird gelöst durch eine ATM-Vermittlungsstelle nach der Lehre des Hauptanspruchs. Vorteilhafte Ausgestaltungen der Erfindung sind den Unteransprüchen zu entnehmen.

Die Lösung baut auf dem Grundgedanken auf, die Koppelelemente eines Koppelfelds, das für Punkt-zu-Punkt-verbindungen optimiert ist, zusätzlich mit der Möglichkeit zu versehen, einige wenige Eingangssignale für beliebig viele Ausgänge zu kopieren, womit insgesamt für wenige Eingangssignale eine sehr hohe Kopienzahl erreichbar ist. Dieses Hauptkoppelfeld wird ergänzt durch ein Kopierkoppelfeld, das ausschließlich der Erstellung einer jeweils begrenzten Anzahl von Kopien für eine große Zahl von Eingangssignalen dient, die dann im Hauptkoppelfeld als Punkt-zu-Punkt-verbindungen vermittelt werden.

Die Verwendung eines separaten Kopierkoppelfeldes ist, im Zusammenhang mit einem einstufigen Hauptkoppelfeld, bereits bekannt aus IEEE INFOCOM 88, März 1988, New Orleans, US, Seiten 29-34, K. Eng et al.: "Multicast and Broadcast Services in a Knockout Packet Switch".

Die Verwendung von Ausgangseinheiten, in denen nach der ursprünglichen Reihenfolge sortiert wird, ist schon in der nicht vorveröffentlichten EP-Al-0 435 046 beschrieben.

Punkt-zu-Punkt-Verbindungen werden im Hauptkoppelfeld als "verbindungslose Verbindungen" mittels Selbststeuerung der Koppelelemente betrieben. Es wird dafür gesorgt, daß diese Verbindungen nach außen als virtuelle Verbindungen wirken. Punkt-zu-Mehrpunkt-Verbindungen werden auch im Hauptkoppelfeld als virtuelle Verbindungen (verbindungsorientiert) mittels Verbindungstabellen betrieben.

Als "verbindungslose Verbindungen" werden solche Verbindungen angesehen, bei denen die einzelnen Zellen einer Verbindung nicht denselben Weg gehen, sondern auf alle möglichen Wege aufgeteilt werden. Dadurch tritt eine recht gleichmäßige Belastung ein; auf Verkehrsmessungen kann verzichtet werden, die dafür sonst erforderlichen Vorrichtungen sind nicht erforderlich. Es besteht aber die Notwendigkeit, auf die richtige Reihenfolge der Zellen zu achten, weil hier Überholvorgänge nicht ausgeschlossen sind.

"Verbindungslose Verbindungen" setzen Koppelelemente voraus, die durch eine in der Wegeinformation enthaltene Adresse direkt gesteuert werden. Die Erstellung von Kopien für Punkt-zu-Mehrpunkt-Verbindungen ist mittels einer solchen Adressierung nur sehr schwer möglich. Beispiele für solche Koppelelemente sind bekannt.

Bekannt sind auch Koppelelemente, die durch indirekte Adressierung gesteuert werden. Als Wegeinformation kommen hierbei Verbindungsnummern in Frage, die in jedem Koppelelement anhand von Verbindungstabellen ausgewertet werden. Ist eine Verbindungsnummer in der Verbindungstabelle eines Koppelelements für mehrere Ausgänge enthalten, so wird an jeden dieser Ausgänge eine Kopie einer Zelle mit dieser Verbindungsnummer ausgegeben.

Gerade bei Punkt-zu-Mehrpunkt-Verbindungen kann es durch stetigen Wechsel der Teilnehmer zu einer ungleichmäßigen Belastung des Hauptkoppelfelds kommen. Da das Hauptkoppelfeld aber primär für "verbindungslose Verbindungen" ausgelegt ist, muß es an seinen Ausgängen Einrichtungen aufweisen, die der Sicherung der richtigen Reihenfolge der Zellen nach etwaigen Überholvorgängen dienen. Es ist deshalb problemlos möglich, bestehende virtuelle Verbindungen umzusortieren. Dabei kurzfristig auftretende Überholvorgänge werden wie bei den "verbindungslosen Verbindungen" korrigiert.

Die Verwendung von Verbindungsnummern für Punkt-zu-Mehrpunkt-Verbindungen im Hauptkoppelfeld zwingt zu besonderen Vorsichtsmaßnahmen, wenn eine Verbindungsnummer mehrfach verwendet werden soll. Auf jeden Fall ist die Gesamtzahl der im Hauptkoppelfeld möglichen Punkt-zu-Mehrpunkt-Verbindungen begrenzt. Dafür könnten aber an einer solchen Punkt-zu-Mehrpunkt-Verbindung grundsätzlich alle das Hauptkoppelfeld verlassenden Leitungen beteiligt sein.

Um mehr Punkt-zu-Mehrpunkt-Verbindungen gleichzeitig zulassen zu können, ist ein separates Kopierkoppelfeld vorgesehen. Von jedem Eingang der Vermittlungsstelle muß ein Eingang des Kopierkoppelfelds erreichbar sein. Es ist nicht zwingend, daß jeder Eingang des Kopierkoppelfelds von jedem Eingang der Vermittlungsstelle erreichbar ist. Bevorzugt wird ein Zugang über das Hauptkoppelfeld, wobei jeder Eingang der Vermittlungsstelle mit einem Eingang des Hauptkoppelfelds und jeder Eingang des Kopierkoppelfelds mit einem Ausgang des Hauptkoppelfelds verbunden ist.

Das Kopierkoppelfeld hat ausschließlich die Aufgabe, die jeweils erforderliche Zahl von Kopien zu erstellen. Die Vermittlung dieser Kopien erfolgt im Hauptkoppelfeld jeweils nach Art einer Punkt-zu-Punkt-Verbindung. Nicht jeder Ausgang des Kopierkoppelnetzes muß von jedem seiner Eingänge erreichbar sein. Die Stufenzahl hängt nur von der Kopierfähigkeit der einzelnen Koppelelemente (d.h., von der Zahl der Ausgänge der Koppelelemente) und von der maximal geforderten Kopienzahl ab. In der Regel reicht ein Kopierkoppelfeld mit wenigen Stufen aus (z.B. zwei- bis dreistufig bei 16X16-Koppelementen). Jede Verbindungsnummer kann hier mehrfach verwendet werden; die Zahl der gleichzeitig möglichen Verbindungen im Kopierkoppelfeld ist deshalb insofern kaum Beschränkungen unterworfen.

Eine so aufgebaute Vermittlungsstelle kann jede Art von Verkehr bearbeiten. Lokale interne Blockierungen können entweder nicht auftreten (Punkt-zu-Punkt-Verbindungen) oder ohne Störungen jederzeit aufgelöst werden (Punkt-zu-Mehrpunkt-Verbindungen). Auch zwischen den beiden Möglichkeiten der Punkt-zu-Mehrpunkt-Verbindungen kann jederzeit ohne Störungen umgeschaltet werden, um die Auslastung an die aktuelle Situation anzupassen. Damit kann insgesamt eine sehr gleichmäßige Auslastung des Hauptkoppelfelds erreicht werden. Eine teilweise Blockierung durch voll ausgelastete Abnehmerleitungen oder eine insgesamt zu hohe Belastung kann aber nicht verhindert werden.

Als Nachteil kann angesehen werden, daß im Hauptkoppelfeld besondere Koppelelemente erforderlich sind, die mit zwei verschiedenen Adressierungsmöglichkeiten arbeiten können. Diese Koppelelemente können aber auch dort verwendet werden, wo eine der beiden Adressierungsmöglichkeiten gar nicht gebraucht wird, beispielsweise im Kopierkoppelfeld. Derartige Koppelelemente können deshalb als Universalkoppelelemente verwendet werden.

Im folgenden wird die Erfindung anhand eines Ausführungsbeispiels unter Zuhilfenahme der beiliegenden Zeichnungen weiter erläutert.
- Fig. 1: zeigt ein bevorzugtes Ausführungsbeispiel einer erfindungsgemäßen ATM-Vermittlungsstelle.
- Fig. 2: zeigt ein Blockschaltbild einer Ausgangseinheit für die erfindungsgemäße Vermittlungsstelle.
- Fig. 3: zeigt eine Realisierungsmöglichkeit für den in der Ausgangseinheit nach Fig. 2 enthaltenen Pufferspeicher.

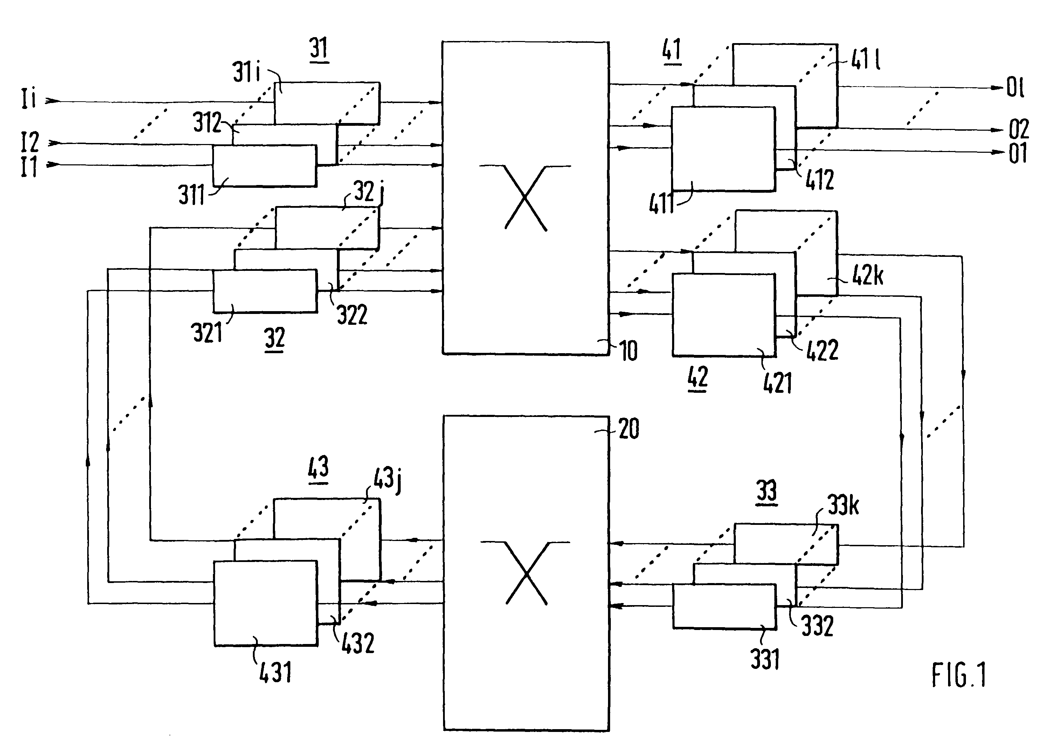

Die ATM-Vermittlungsstelle nach Fig. 1 weist Eingänge I1, I2, ..., Ii, Ausgänge O1, O2, ..., Ol, ein Hauptkoppelfeld 10, ein Kopierkoppelfeld 20, drei Gruppen von Eingangseinheiten 31, 32 und 33 und drei Gruppen von Ausgangseinheiten 41, 42 und 43 auf. Die Gruppe 31 enthält i Eingangseinheiten 311, 312, ..., 31i; die Gruppe 32 enthält j Eingangseinheiten 321, 322, ..., 32j; die Gruppe 33 enthält k Eingangseinheiten 331, 332, ..., 33k; die Gruppe 41 enthält l Ausgangseinheiten 411, 412, ..., 41l; die Gruppe 42 enthält k Ausgangseinheiten 421, 422, ..., 42k; die Gruppe 43 enthält j Ausgangseinheiten 431, 432, ..., 43j.

Jeder der Eingänge I1, I2, ..., Ii der Vermittlungsstelle ist mit dem Eingang einer der Eingangseinheiten 311, 312, ..., 31i der Gruppe 31 verbunden, deren Ausgänge jeweils mit einem Eingang des Hauptkoppelfelds 10 verbunden sind. Jeder der Ausgänge O1, O2, ..., Ol der Vermittlungsstelle ist mit dem Ausgang einer der Ausgangseinheiten 411, 412, ..., 41l der Gruppe 41 verbunden, deren Eingänge jeweils mit einem Ausgang des Hauptkoppelfelds 10 verbunden sind.

Die Eingänge der Ausgangseinheiten 421, 422, ..., 42k der Gruppe 42 sind mit weiteren Ausgängen des Hauptkoppelfelds 10 verbunden. Die Ausgänge der Ausgangseinheiten 421, 422, ..., 42k der Gruppe 42 sind jeweils mit dem Eingang einer der Eingangseinheiten 331, 332, ..., 33k der Gruppe 33 verbunden, deren Ausgänge mit Eingängen des Kopierkoppelfelds 20 verbunden sind.

Die Eingänge der Ausgangseinheiten 431, 432, ..., 43j der Gruppe 43 sind mit je einem Ausgang des Kopierkoppelfelds 20 verbunden. Die Ausgänge der Ausgangseinheiten 431, 432, ..., 43j der Gruppe 43 sind jeweils mit dem Eingang einer der Eingangseinheiten 321, 322, ..., 32j der Gruppe 32 verbunden, deren Ausgänge mit weiteren Eingängen des Hauptkoppelfelds 10 verbunden sind.

Für die vorliegende Erfindung ist es ohne Bedeutung, ob die Eingänge I1, I2, ..., Ii und die Ausgänge O1, O2, ..., Ol auch mit Endteilnehmern, Nebenstellenanlagen, Vorfeldeinrichtungen oder nur mit anderen Vermittlungsstellen verbunden sind. In der Regel wird die Zahl der Eingänge, i, gleich der Zahl der Ausgänge, l, sein, d.h. i = l.

Das Hauptkoppelfeld 10 enthält eine Vielzahl von in mehreren Stufen angeordneten Koppelelementen. Es ist so aufgebaut, daß Verbindungen zwischen jedem Eingang und jedem Ausgang möglich sind. Beispiele derartiger Koppelfelder sind jedem Fachmann geläufig.

Die einzelnen Koppelelemente sind so aufgebaut, daß sie durch eine im Zellkopf enthaltene Information umschaltbar sind zwischen einer ersten Adressierungsart, bei der die Zelle aufgrund einer mittels eines von außen nicht beeinflußbaren Algorithmus ausgewerteten Wegeinformation weitergeleitet wird, und einer zweiten Adressierungsart, bei der die Zelle aufgrund der mit Hilfe einer Verbindungstabelle ausgewerteten Wegeinformation weitergeleitet wird. Dabei ist vorgesehen, daß bei der zweiten Adressierungsart eine Zelle auch kopiert und auf mehreren Wegen weitergeleitet werden kann.

ATM-Koppelelemente, die mit Adressierung mittels eines von außen nicht beeinflußbaren Algorithmus arbeiten, sind dem Fachmann ebenso bekannt wie solche, die mit Adressierung mittels Verbindungstabelle arbeiten.

Als Algorithmus kommt beispielsweise eine Zuordnungsvorschrift in Frage, wie sie aus "SYSTEM 12, Digital-Koppelnetz", Elektrisches Nachrichtenwesen, Band 56, Nr. 2/3, 1981, Seiten 148-160 für Zeitmultiplexvermittlungsanlagen bekannt ist. Dort besteht die Möglichkeit, eine ganz bestimmte, durch die Wegeinformation direkt vorgegebene Ausgangsleitung zu adressieren. Es besteht auch die Möglichkeit, durch die Wegeinformation eine beliebige Ausgangsleitung anwählen zu lassen. Die dort gegebene Möglichkeit, innerhalb einer Ausgangsleitung auch noch einen bestimmten Kanal auszuwählen, ist bei ATM weder möglich noch erforderlich. Sinnvoll ist aber die Möglichkeit, durch die Wegeinformation eine beliebige Ausgangsleitung aus einer vorgegebenen Gruppe von Ausgangsleitungen auszuwählen. Bei der Auswahl einer beliebigen Ausgangsleitung kann beispielsweise die augenblickliche Auslastung herangezogen werden. Es ist auch möglich, durch die Wegeinformation eine im Koppelelement enthaltene Einrichtung zu adressieren, beispielsweise, um die für die zweite Adressierungsart erforderliche Verbindungstabelle zu verändern.

Die für die zweite Adressierungsart erforderliche Verbindungstabelle kann ein RAM mit M Adressbits und N Datenbits sein. Die Adressbits werden durch die für dieses Koppelelement gültigen Bits der Wegeinformation gebildet, die Datenbits geben diejenige Ausgangsleitung an, auf die auszugeben ist. Sind mehrere Datenbits gleichzeitig gesetzt, so wird die Zelle auf mehreren Ausgangsleitungen ausgegeben, wodurch auf einfache Weise ein Kopieren von Zellen erreicht ist. Statt eines einzigen RAM kann auch jedem Ausgang zugeordnet ein RAM mit M Adressbits und einem Datenbit vorgesehen sein, beispielsweise ein 128 x 1 - RAM für M = 7.

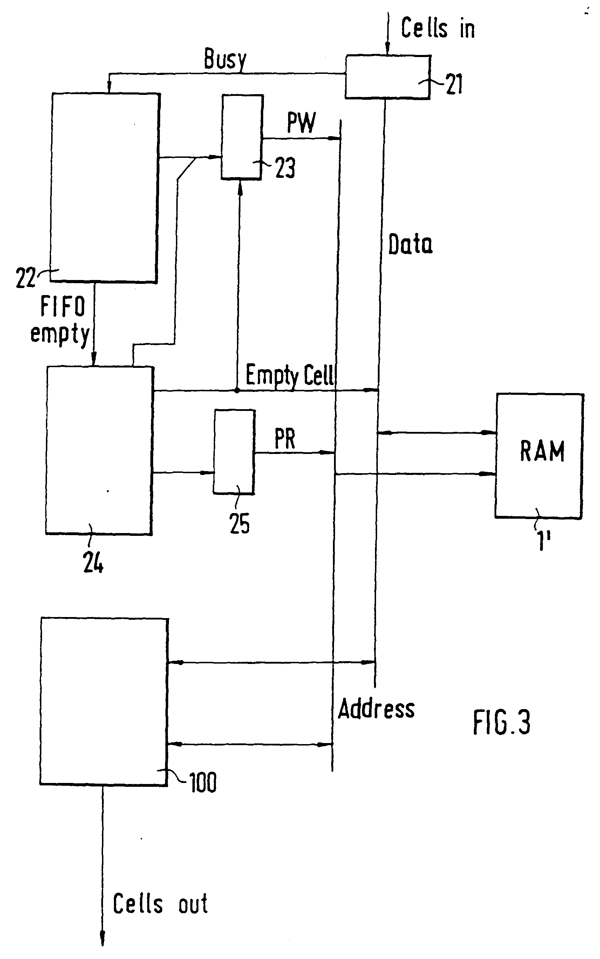

Die Koppelelemente müssen so aufgebaut sein, daß sie auf zwei unterschiedliche Arten arbeiten können. Hierfür ist grundsätzlich ein Aufbau geeignet, wie er anhand der Figuren 3 und 5 der DE-A1 37 42 939.6 beschrieben ist. Die dort beschriebenen Teil-Koppelelemente 22 und 24 müssen hier ersetzt werden durch ein Teil-Koppelelement für die erste Adressierungsart und ein Teil-Koppelelement für die zweite Adressierungsart.

Das Hauptkoppelfeld 10 ist für Punkt-zu-Punkt-Verbindungen optimiert. Hierzu ist es so aufgebaut und wird so betrieben, daß in der ersten Hälfte jede Zelle einen beliebigen Weg nimmt, so daß damit der Verkehr gleichmäßig aufgeteilt wird. In der zweiten Hälfte wird dann jede Zelle gezielt zum gewünschten Ausgang geleitet. Jedes Koppelelement der mittleren Stufe muß deshalb von jedem Eingang des Hauptkoppelfelds aus erreichbar sein und auch jeden Ausgang des Hauptkoppelfelds erreichen können.

Bevorzugt wird als Hauptkoppelfeld ein Umkehrkoppelfeld. Jedes Koppelelement der ersten Stufe ist dabei gleichzeitig Koppelelement der letzten Stufe. Ein Teil seiner Eingänge ist mit Eingängen des Hauptkoppelfelds, ein anderer Teil seiner Eingänge ist mit Ausgängen von Koppelelementen der vorletzten Koppelstufe verbunden. Ein Teil seiner Ausgänge ist mit Eingängen von Koppelelementen der zweiten Koppelstufe verbunden, ein anderer Teil seiner Ausgänge ist mit Ausgängen des Hauptkoppelfelds verbunden. Jedes Koppelelement der zweiten Stufe ist gleichzeitig Koppelelement der vorletzten Stufe, usw. Die Stufenzahl ist ungerade. Solche Umkehrkoppelfelder sind von der Zeitmultiplextechnik her bekannt, beispielsweise aus dem genannten Artikel "SYSTEM 12, Digital-Koppelnetz". Sie haben den Vorteil, daß die mittleren Stufen nicht zwingend für jede Verbindung benutzt werden müssen.

Das Kopierkoppelfeld 20 kann aus denselben Koppelelementen aufgebaut sein, wobei hier aber nur eine der Adressierungsarten benutzt wird. Im Gegensatz zum Hauptkoppelfeld 10 muß hier aber nicht jeder Ausgang von jedem Eingang erreichbar sein. Es genügt, wenn von jedem Eingang aus eine vorgegebene Zahl von Ausgängen erreichbar ist. Es muß auch nicht zwingend von jedem Eingang aus dieselbe Zahl von Ausgängen erreichbar sein. Das Kopierkoppelfeld 20 kann deshalb aus einem Teil bestehen, in dem von jedem Eingang aus 128 Ausgänge erreichbar sind und aus einem anderen Teil, in dem von jedem Eingang aus 32 Ausgänge erreichbar sind. Es muß natürlich berücksichtigt werden, daß die gesamte Verkehrsbelastung vom Eingang des Kopierkoppelfelds zu dessen Ausgang hin in Abhängigkeit vom durchschnittlichen Kopierfaktor ansteigt.

Auch wenn wegen der Erhöhung des Verkehrs durch das Kopieren die Zahl der Ausgangseinheiten in der Gruppe 42, die gleich der Zahl der Eingangseinheiten in der Gruppe 33 ist, kleiner ist als die Zahl der Ausgangseinheiten in der Gruppe 43, die gleich der Zahl der Eingangseinheiten in der Gruppe 32 ist, so ist es doch möglich, jede Eingangseinheit der Gruppe 32 fest einer Ausgangseinheit der Gruppe 42 und jede Ausgangseinheit der Gruppe 43 fest einer Eingangseinheit der Gruppe 33 zuzuordnen. Statt einer Zuordnung von Einheiten der Gruppe 43 zu Einheiten der Gruppe 33 ist auch eine Zusammenfassung der Ausgangseinheiten der Gruppe 43 mit den entsprechenden Eingangseinheiten der Gruppe 32 und eine Zusammenfassung der Ausgangseinheiten der Gruppe 42 mit den entsprechenden Eingangseinheiten der Gruppe 33 möglich. Die Zuordnung oder Zusammenfassung sollte zumindest den Austausch von Steuerdaten zulassen.

Zusammen mit der Ausbildung des Hauptkoppelfelds 10 als Umkehrkoppelfeld ist damit die Möglichkeit geschaffen, daß sämtliche Teile der Vermittlungsstelle (Eingangs- und Ausgangseinheiten, Koppelelemente) über die normalen Verbindungswege auf einfache Weise Steuerdaten austauschen können. Über weitere Ein- und Ausgänge des Hauptkoppelfeldes 10 können verschiedene Hilfseinrichtungen angeschlossen sein, die in gleicher Weise mit allen anderen Teilen der Vermittlungsstelle Steuerdaten austauschen können. Steuerung, Diagnose und Wertung sind aber nicht Gegenstand der vorliegenden Erfindung.

Zu den Eingangs- und Ausgangseinheiten ist zunächst zu bemerken, daß alle Vermittlungsstellen irgendwelche Arten von Eingangs- und Ausgangseinheiten aufweisen. Hier soll nur das beschrieben werden, was für die Erfindung spezifisch ist.

Jede Eingangseinheit hat zunächst die Aufgabe, jeder zu vermittelnden Zelle eine Wegeinformation beizufügen. Hierzu wird auf die Seiten 6 bis 9 eines Artikels von W. Schmidt in "Der Fernmelde=Ingenieur", Heft 9, September 1987, verwiesen. Dort wird der grundsätzliche Vermittlungsablauf beschrieben. Im Zellkopf einer jeden Zelle muß zwangsläufig eine verbindungsindividuelle Kennzeichnung enthalten sein. Aus dieser wird in der Eingangseinheit aufgrund einer Tabelle eine Wegeinformation für das nachfolgende Koppelnetz ermittelt und der Zelle beigefügt. Dabei braucht zwischen den beiden Adressierungsarten überhaupt nicht unterschieden zu werden, da das Datenformat zwangsläufig gleich sein muß.

In dem genannten Artikel sind auf Seite 7, vorletzter Abschnitt, auch "Systeme, die mit Zeitmarken arbeiten" genannt. Bei diesen muß "die Ankunftszeit eines Pakets ermittelt und der Paketinformation am Eingang des Knotens hinzugefügt werden". Wenn diese Zeitmarken ausreichend fein auflösen, dann können sie auch verwendet werden, um die Reihenfolge der Zellen zu kennzeichnen. Auch wenn an sich keine Zeitmarken gebraucht werden, kann in gleicher Weise verfahren werden, um die Reihenfolge zu kennzeichnen. Es können aber auch in jeder Eingangseinheit unabhängige Modulo-N-Zähler verwendet werden, um diese Marken, im folgenden auch als Marken erster Art bezeichnet, zu vergeben. Da die richtige Reihenfolge nur zwischen den Zellen jeder einzelnen Verbindung gewährleistet sein muß, können die Verbindungsnummern, sofern solche vorhanden sind, als Ausscheidungskriterium mit verwendet werden, sie werden im folgenden als Marken zweiter Art bezeichnet. Die Marken erster Art können sowohl für die Zellen jeder einzelnen Verbindung getrennt als auch für die Zellen aller über eine Eingangseinheit geführten Verbindungen gemeinsam vergeben werden.

Insoweit, als unter Eingangseinheit nur das angesehen wird, was erfindungsspezifisch zu einer bekannten ATM-Vermittlungsstelle hinzukommt, wird nur dann eine Eingangseinheit benötigt, wenn die von außen kommenden Zellen nicht bereits eine die Reihenfolge kennzeichnende Marke enthält oder wenn diese nicht ohne weiteres verwertbar ist.

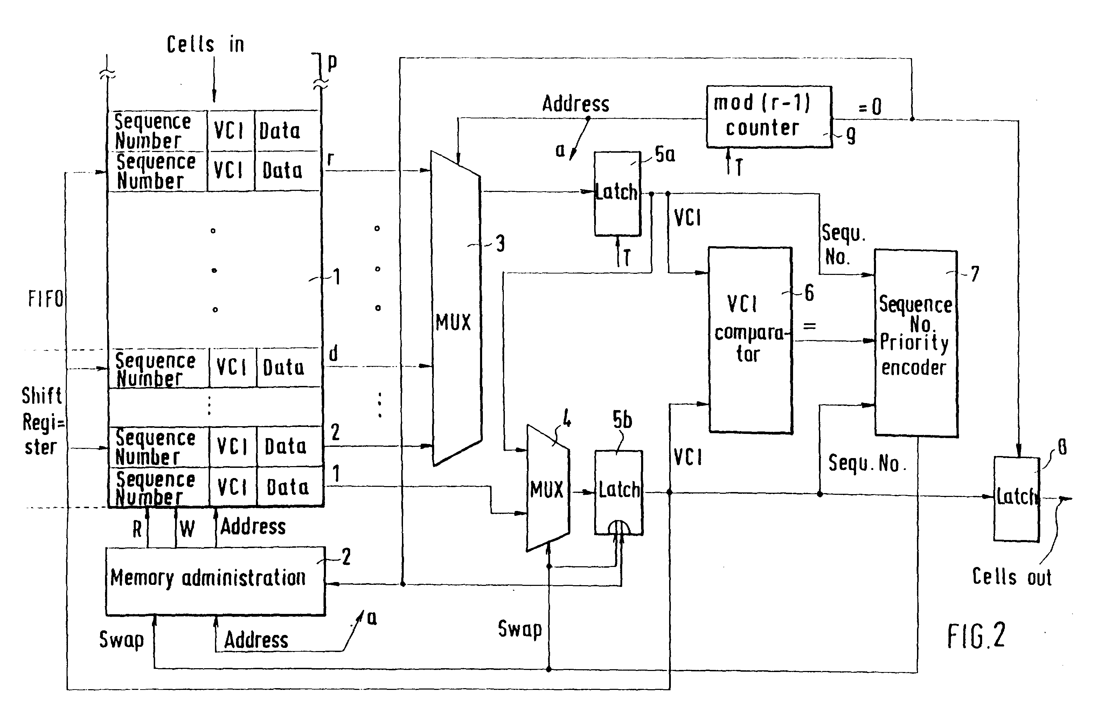

Anhand der Fig. 2 und 3 wird ein Ausführungsbeispiel für eine Ausgangseinheit beschrieben. Alle Ausgangseinheiten sind grundsätzlich untereinander gleich. Sie unterscheiden sich im wesentlichen durch die vorgegebene Verzögerungszeit.

Der Grundgedanke dieses Ausführungsbeispiels liegt darin, jede Zelle am Ausgang solange anzuhalten, bis sichergestellt ist, daß keine ältere Zelle mehr unterwegs zwischengespeichert sein kann. Vor der Weitergabe der Zelle wird geprüft, ob unter den später am Ausgang angekommenen Zellen noch eine Zelle ist, die vorher auszugeben ist.

Dies wird vorzugsweise dadurch realisiert, daß ausgangsseitig ein Pufferspeicher vorhanden ist, der mindestens teilweise schieberegisterartig betrieben wird und dadurch eine vorgegebene Verzögerung bewirkt. Vor Ausgabe einer Zelle wird mindestens der schieberegisterartig betriebene Teil des Pufferspeichers daraufhin untersucht, ob eine später eingeschriebene Zelle früher auszugeben ist. Wenn ja, werden die beiden Zellen vertauscht.

In diesem Ausführungsbeispiel einer Ausgangseinheit wird ein Datenstrom angenommen, der auf Zellbreite parallelisiert ist, bei dem also alle Bits einer Zelle gleichzeitig auf parallelen Leitungen weitergegeben werden. Dies ist in der Regel weder gegeben noch besonders vorteilhaft. Einerseits ist es aber immer möglich, durch Serien-Parallel-Wandler, Parallel-Serien-Wandler und Pufferspeicher einen solchen Datenstrom herzustellen, andererseits liegt es im Bereich fachmännischen Handelns, das vorliegende Ausführungsbeispiel an ein konkret vorgegebenes Datenformat, wie es beispielsweise im Innern einer ATM-Vermittlungsstelle verwendet wird, anzupassen. Dabei wird es dann auch vorteilhaft oder gar notwendig sein, nicht die Zellen selbst im Pufferspeicher zu speichern, sondern nur die Angaben, die zum Umsortieren und zum Wiederauffinden der in einem separaten Speicher abgespeicherten Zellen notwendig sind. Der Umgang mit indirekter Adressierung ist für jeden Fachmann geläufig. Sie kann auch im gezeigten Beispiel ohne weiteres verwendet werden, wobei dann anstelle der Daten jeweils die Adresse gespeichert wird, unter der die Daten tatsächlich abgespeichert sind.

Die in Fig. 2 dargestellte Ausgangseinheit weist einen Pufferspeicher 1, eine Speicherverwaltungseinheit 2, zwei Multiplexer 3 und 4, zwei Zwischenspeicher 5a und 5b, zwei Vergleicher 6 und 7, einen weiteren Zwischenspeicher 8 und einen Zähler 9 auf.

Der Pufferspeicher 1 weist p Speicherplätze auf. Jeder Speicherplatz ist für die Aufnahme einer vollständigen Zelle vorgesehen. Für die vorliegende Ausgangseinheit von Bedeutung und deshalb in Fig. 1 besonders ausgewiesen ist pro Zelle eine Marke erster Art, Sequence Number, eine Marke zweiter Art, VCI (= Virtuel Circuit Identifier) und der Rest der Zelle, Data. Die Darstellung in Fig. 2 gibt den tatsächlichen Speicherplatzbedarf für die einzelnen Teile nicht richtig wieder.

Bevorzugt wird zur Vergabe der Marken erster Art ein Modulo-N-Zähler benutzt, wobei N so groß zu wählen ist, daß innerhalb einer vorgegebenen Zeit weniger als N/2 Zahlen als Marken erster Art vergeben werden. Wegen des periodischen Auftretens aller Zahlen muß nach beiden Richtungen ein ausreichend großer Abstand bestehen, um Eindeutigkeit zu erhalten. Mit der angegebenen Wahl von N können alle Zellen eindeutig in ihrer ursprünglichen Reihenfolge rekonstruiert werden, die bei der Vergabe der Nummern nicht weiter als die genannte vorgegebene Zeit auseinanderliegen. Diese Zeit muß dann zweckmäßigerweise so vorgegeben sein, daß, abgesehen von der zugelassenen Fehlerquote, sichergestellt ist, daß jede Zelle innerhalb dieser Zeit die letzten r Speicherplätze des Pufferspeichers 1 durchläuft. Als grober Anhaltspunkt für die vorzugebende Zeit kann das Doppelte der Differenz zwischen maximaler und minimaler Laufzeit zwischen Vergabe der Marken erster Art und der Ankunft in der Ausgangseinheit angenommen werden.

Die Marke zweiter Art, VCI, kennzeichnet die Zugehörigkeit einer Zelle zu einer bestimmten virtuellen Verbindung.

Statt des Rests der Zelle, Data, kann im Pufferspeicher 1 auch die Adresse abgespeichert werden, unter der dieser Rest in einem anderen Speicher abgespeichert ist.

Der Pufferspeicher 1 ist in drei Teile untergliedert, nämlich einen schieberegisterartigen Teil, Shift Register, mit den Speicherplätzen 1 bis d und einen nach Art eines FIFO-Speichers betriebenen Teil, FIFO, der wieder aus zwei Teilen mit den Speicherplätzen d+1 bis r und r+1 bis p zusammengesetzt ist. Zumindest auf die Speicherplätze 1 bis r muß dabei einzeln derart zugegriffen werden können, daß ihr Inhalt gelesen werden kann oder daß in sie ein neuer Inhalt eingeschrieben werden kann.

Die Dimensionierung des Pufferspeichers, d.h. die Wahl der Zahlenwerte für d, r und p, muß im konkreten Anwendungsfall erfolgen. Berücksichtigt werden muß dabei vor allem die zulässige Fehlerrate, die minimale und maximale Laufzeit einer Zelle seit dem ersten Verzweigungspunkt, die Anzahl der gleichzeitig über eine Ausgangseinheit zugelassenen Verbindungen, die für eine Verbindung zugelassene minimale und maximale Zahl von Zellen pro Zeiteinheit und deren zulässige Schwankungsbreite. Für einen typischen Anwendungsfall ergab eine Simulation Werte von d = 10, r = 34 und p = 330 für den Fall, daß nur ein Durchgang durch das Hauptkoppelfeld 10 auszugleichen ist. Für Punkt-zu-Mehrpunkt-Verbindungen, die zunächst das Hauptkoppelfeld 10, dann das Kopierkoppelfeld 20 und dann nochmals das Hauptkoppelfeld 10 durchlaufen, sind die obigen Werte etwa mit dem Faktor 2 ... 2,5 zu multiplizieren, zumindest dann, wenn nur am Ausgang in der Gruppe 41 die Reihenfolge wiederhergestellt wird. Die genannten Werte sind aber nur grobe Anhaltspunkte. Die Wahl des Wertebereichs für die Marken erster Art, Sequence Number, ist davon abhängig. Für die oben genannten Zahlenwerte und die verbindungsindividuelle Vergabe dieser Marken kann N = 512 als Anhaltspunkt gelten.

Am Eingang der Ausgangseinheit ankommende Zellen, "Cells in", werden zunächst darauf untersucht, ob es am Ausgang auszugebende Zellen sind oder solche, die in der Ausgangseinheit enden. Dies sind einerseits Leerzellen, andererseits solche, die Steuersignale für die Ausgangseinheit (oder eine in der Regel damit verbundene Eingangseinheit, die anders nicht erreichbar ist) enthalten. Die auszugebenden Zellen werden in den Pufferspeicher 1 eingegeben und zwar derart, daß sie zunächst im dem nach Art eines FIFO-Speichers betriebenen Teil bis auf den untersten freien Speicherplatz "durchfallen". Immer, wenn am Ausgang eine Zelle ausgegeben wird, rücken im Pufferspeicher alle Zellen um einen Speicherplatz nach unten. Ist der letzte Speicherplatz des FIFO-Speichers, d+1, belegt, dann wird die darin enthaltene Zelle in den ersten Speicherplatz des Schieberegisters, d, übernommen. Ist der Speicherplatz d+1 leer, dann muß eine Leerzelle in den Speicherplatz d eingeschrieben werden. Die Aufenthaltsdauer jeder Zelle kann damit, zumindest relativ zu jeder anderen Zelle, aus ihrer Position im Pufferspeicher 1 abgeleitet werden. Die Ausgabe aus dem Pufferspeicher 1 wird unten beschrieben werden.

Die Speicherverwaltungseinheit 2 ist in Fig. 2 nur sehr schematisch dargestellt. Sie hat zunächst die Aufgabe, den bereits beschriebenen normalen Betrieb des Pufferspeichers 1 zu gewährleisten. Dies erfolgt durch Anlegen von Adressen, Address, Schreibbefehlen, W, und Lesebefehlen, R. Außerdem ist, in Fig. 2 nicht dargestellt, eine Information über das Vorhandensein oder Nichtvorhandensein einer einzuschreibenden Zelle erforderlich. Weiter hat die Speicherverwaltungseinheit 2 die Aufgabe, den Inhalt des vom Zähler 9 adressierten Speicherplatzes, Address, gegen den Inhalt des Zwischenspeichers 5b zu tauschen, wenn hierzu ein Befehl, Swap, gegeben wird.

Durch den Multiplexer 3 kann wahlweise auf den Inhalt eines der Speicherplätze 2 bis r des Pufferspeichers 1 zugegriffen und in den Zwischenspeicher 5a weitergegeben werden. Die Auswahl des Speicherplatzes erfolgt durch den Zähler 9, Address.

Durch den Multiplexer 4 wird am Anfang eines Ausgabezyklus der Inhalt des Speicherplatzes 1 des Pufferspeichers 1 in den Pufferspeicher 5b übertragen. Dies ist der Fall, wenn der Zähler 9 zurückgesetzt wird, "=0". Durch einen besonderen Befehl, Swap, wird mittels des Multiplexers 4 der Inhalt des Zwischenspeichers 5a in den Zwischenspeicher 5b übernommen. Daß mittels desselben Befehls, Swap, in den Pufferspeicher 5b eingeschrieben und aus diesem ausgelesen wird, ist nichts ungewöhnliches und kann vom Fachmann durch übliche Maßnahmen berücksichtigt werden.

Durch den Vergleicher 6 werden die Marken zweiter Art, VCI, derjenigen beiden Zellen miteinander verglichen, die gerade in den Zwischenspeichern 5a und 5b gespeichert sind. Nur bei Gleichheit der beiden Marken zweiter Art, d.h. wenn die beiden Zellen derselben Verbindung angehören, wird der nachfolgende Vergleicher aktiviert.

Der Vergleicher 7 vergleicht die Marken erster Art, Sequence Number, der beiden in den Zwischenspeichern 5a und 5b enthaltenen Zellen. Zeigt der Vergleicher 6 an, daß beide Zellen derselben Verbindung angehören und wird festgestellt, daß die im Zwischenspeicher 5a enthaltene Zelle älter ist als die im Zwischenspeicher 5b enthaltene, so wird ein Befehl, Swap, abgegeben, durch den die ältere Zelle in den Zwischenspeicher 5b und die jüngere Zelle an deren Platz im Pufferspeicher 1 übernommen werden. Im Ergebnis werden damit die beiden Zellen vertauscht.

Der Zähler 9 sorgt für den richtigen zeitlichen Ablauf. Er zählt, mit einem vorgegebenen Takt T, periodisch von 2 bis r. Wird der Zähler 9 beim Zählerstand r zurückgesetzt, "=0", so wird ein Ausgabezyklus abgeschlossen und der nächste begonnen. Der Inhalt des Zwischenspeichers 5b, der im vorangegangenen Zyklus als die älteste zu einer bestimmten Verbindung gehörige Zelle erkannt wurde, wird in den Zwischenspeicher 8 übernommen und steht an dessen Ausgang, Cells out, zur Ausgabe zur Verfügung. Gleichzeitig wird der Inhalt des Speicherplatzes 1 des Pufferspeichers 1 über den Multiplexer 4 in den Pufferspeicher 5b übernommen. Anschließend werden der Reihe nach die Speicherplätze 2 bis r auf ältere Zellen (Marken erster Art) derselben Verbindung (Marken zweiter Art) untersucht. Dazu wird der Inhalt jeweils über den Multiplexer 3 in den Zwischenspeicher 5a übernommen und mittels der Vergleicher 6 und 7 verglichen. Durch die oben beschriebenen Tauschaktionen, Swap, ist sichergestellt, daß beim Zählerstand r des Zählers 9 tatsächlich die älteste Zelle der betrachteten Verbindung im Zwischenspeicher 5b gespeichert ist und daß alle jüngeren Zellen dieser Verbindung noch oder wieder im Pufferspeicher 1 enthalten sind.

Die in Fig. 2 gewählte Darstellung der Ausgangseinheit zeigt vor allem die Funktionsweise der Ausgangseinheit. Der Aufbau und die Verwaltung des Pufferspeichers mit einem nach Art eines FIFO-Speichers betriebenen Teil und einem schieberegisterartig betriebenen Teil kommt deutlich in der in Fig. 3 gewählten Darstellung zum Ausdruck. Die Verteilung der Takte, einschließlich der Schreib- und Lesebefehle, ist hier nicht mit dargestellt.

Der Pufferspeicher ist durch einen Schreib-Lese-Speicher (RAM), 1', realisiert. Die ankommenden Zellen werden über einen Eingangsspeicher 21 auf einen Datenbus, Data, gegeben, an dem auch der Schreib-Lese-Speicher 1' angeschlossen ist. Eine Einschreibsteuerung 22 wird vom Eingangsspeicher 21 aktiviert, Busy, wenn eine einzuschreibende Zelle anliegt. Über den Einschreibzähler 23 wird eine Adresse PW über einen Adressbus, Address, an den Schreib-Lese-Speicher 1' angelegt und die Zelle in diesen eingeschrieben. Anschließend wird der Einschreibezähler 23 von der Einschreibsteuerung 22 aus inkrementiert. Eine Auslesesteuerung 24 gibt über einen Auslesezähler 25 die Adresse, PR, an, die dem Speicherplatz 1 entspricht. Nach jeder Ausgabe einer Zelle wird der Auslesezähler 25 von der Auslesesteuerung 24 aus inkrementiert. Der Unterschied zwischen dem Inhalt PW des Einschreibzählers 23 und dem Inhalt PR des Auslesezählers 25 muß immer mindestens gleich d sein. Dies wird von der Einschreibsteuerung 22 überwacht und gegebenenfalls, FIFO empty, an die Auslesesteuerung 24 gemeldet, die dann an den Datenbus, Data, eine Leerzelle, Empty Cell, anlegt und das Einschreiben in den durch den Einschreibzähler 23 angegebenen Speicherplatz veranlaßt und anschließend den Einschreibzähler 23 inkrementiert.

Der Rest der Ausgangseinheit ist hier durch eine Zugriffs-, Vergleicher- und Ausgabeeinheit 100 dargestellt.

Beispiele für mögliche weitere Abwandlungen der Ausgangseinheiten sind:

Bei der Suche nach der ältesten Zelle einer Verbindung muß nicht während des Suchvorgangs mehrmals eine relativ ältere Zelle gegen die eigentlich zur Ausgabe vorgesehene Zelle vertauscht werden. Es genügt, den ganzen vorgesehenen Speicherbereich durchzusuchen und sich nur Lage und Alter der jeweils ältesten gefundenen Zelle zu merken und dann am Ende des Suchvorgangs nur einmal zu tauschen.

Es ist auch möglich, überhaupt nicht zu tauschen und nur die älteste gefundene Zelle bei der Ausgabe vorzuziehen.

Der schieberegisterartig betriebene Teil des Pufferspeichers muß nicht zwingend dessen Ende bilden. Er kann auch am Anfang oder in der Mitte des Pufferspeichers liegen.

Abschließend sollen noch Beispiele für mögliche weitere Abwandlungen der gesamten Vermittlungsstelle angegeben werden:

Es ist nicht zwingend, daß das Kopierkoppelfeld 20 nur über das Hauptkoppelfeld 10 erreichbar ist. Als Beispiel einer Vermittlungsstelle mit mehreren Teilkoppelfeldern wird hier auf die DE 38 16 747 A1 verwiesen. In der dortigen Fig. 5 wird der ankommende und abgehende Verkehr in Eingangs- und Ausgangseinheiten 17 und 18 auf mehrere Teilkoppelfelder aufgeteilt. Auch Verbindungen der Teilkoppelfelder untereinander sind dort dargestellt. Auch das Digital-Koppelnetz von SYSTEM 12 ist, wie beispielsweise Bild 3a des schon genannten Artikels zeigt, in verschiedene Koppelfelder aufgeteilt, wobei der Verkehr durch ein separates Zugangskoppelfeld aufgeteilt wird. Allerdings sind die dortigen Koppelfelder ("Ebenen") untereinander gleich.

Es ist nicht zwingend, daß die ursprüngliche Reihenfolge der Zellen am Ausgang eines jeden Koppelfelds wiederhergestellt wird. An sich genügt es, dies vor dem Verlassen der Vermittlungsstelle, also in der Gruppe 41, durchzuführen. Dort kommen aber auf ein und derselben Ausgangsleitung, also auch in ein und derselben Ausgangseinheit, Verbindungen vor, die nur einmal das Hauptkoppelfeld 10 durchlaufen haben, als auch solche, die das Hauptkoppelfeld 10 zweimal und zusätzlich das Kopierkoppelfeld 20 durchlaufen haben. Es muß also entweder die Mindestverzögerungszeit für alle Verbindungen sehr groß gewählt werden, was auch mit entsprechend großem Speicherbedarf verbunden ist, oder es muß die Mindestverzögerungszeit verbindungsindividuell umschaltbar sein. Hierzu könnten die Ausgangseinheiten jeweils in zwei parallele Teilausgangseinheiten mit unterschiedlicher Mindestverzögerungszeit aufgeteilt sein.

Die Dimensionierung, und damit der Speicherbedarf, hängen nicht nur vom Aufbau der Vermittlungsstelle und den vorgegebenen zulässigen Fehlerquoten, sondern auch von der Betriebsweise ab.

Da Kopien sowohl im Hauptkoppelfeld 10 als auch im Kopierkoppelfeld 20 möglich sind, können Punkt-zu-Mehrpunkt-Verbindungen sowohl auf kurzem Weg, allein durch das Hauptkoppelfeld 10, als auch auf langem Weg, zweimal durch das Hauptkoppelfeld 10 und zusätzlich durch das Kopierkoppelfeld 20, geführt werden. Nun soll aber jederzeit zwischen den gegebenen Möglichkeiten umgeschaltet werden können, um an die augenblickliche Belastung anpassen zu können. Dies würde einen Extremwert an auszugleichendem Laufzeitunterschied bedeuten. Dies kann vermieden werden, wenn alle Punkt-zu-Mehrpunkt-Verbindungen über das Kopierkoppelfeld 20 geführt werden. Im Hauptkoppelfeld 10 zu kopierende Zellen müßten dieses dann als Punkt-zu-Punkt-Verbindung über das Hauptkoppelfeld 10 und das Kopierkoppelfeld 20 erreichen und erst beim zweiten Durchgang durch das Hauptkoppelfeld 10 kopiert werden. Da insgesamt nur sehr wenige derartige Verbindungen möglich sind, wäre die zusätzliche Belastung problemlos. Die bei den Pufferspeichern in den Ausgangseinheiten der Gruppe 41 möglichen Einsparungen wären aber beträchtlich.

Typische Beispiele für Punkt-zu-Mehrpunkt-Verbindungen sind Konferenzschaltungen und Ton- oder Fernseh-Rundfunksendungen. Die zugehörigen Zellen repräsentieren einen kontinuierlichen Signalstrom. Sie entstehen beim Sender in konstanten Abständen und werden beim Empfänger nicht nur in der richtigen Reihenfolge, sondern auch wieder in den ursprünglichen konstanten Abständen benötigt.

Die regelmäßige Wiederherstellung konstanter Abstände ist nicht nur technisch aufwendig, sie setzt auch eine unterschiedliche Behandlung von Zellen unterschiedlicher Herkunft voraus. Einfacher ist es, für alle Zellen eine gleiche Verzögerung anzustreben. Ausgangseinheiten, die für alle Zellen die gleiche Verzögerung gewährleisten, stellen bei Zellen derselben Verbindung zwangsweise auch die richtige Reihenfolge sicher.

Wenn auch eine exakt gleiche Verzögerung aller Zellen bei ATM grundsätzlich nicht gewährleistet werden kann, so ist es doch möglich, in den Ausgangseinheiten die Zellen nach darin enthaltenen Zeitmarken zu sortieren und dann der Reihe nach auszugeben, wenn aufgrund der Zeitmarke die vorgesehene Verzögerung erreicht ist. Dies setzt eine entsprechend genaue Zeitverteilung an alle Eingangs- und Ausgangseinheiten voraus.

Für ATM ist es grundsätzlich von Vorteil, gleiche Laufzeiten für alle Zellen einer Verbindung anzustreben, d.h., den "delay jitter" auszugleichen. Wird dies, wie soeben angedeutet, mit der Wiederherstellung der richtigen Reihenfolge kombiniert, so kann der hierfür erforderliche Aufwand durchaus angemessen sein. Gerade in diesem Fall ist es von Vorteil, wenn nach jedem Durchgang durch ein Koppelfeld sofort, d.h., auch in den Gruppen 42 und 43, ein Ausgleich erfolgt. Der jeweilige Speicheraufwand ist dabei minimiert. Da die Zahl der Ausgangseinheiten der Gruppen 42 und 43 gegenüber der Gruppe 41 klein ist und gerade bei den Ausgangseinheiten der Gruppe 41 gespart werden kann, ergibt sich hier insgesamt eine Einsparung.

Weiter muß berücksichtigt werden, daß es sinnvoll sein kann, möglichst wenige unterschiedliche Bauteile oder Baugruppen verwenden zu müssen, die dann aber etwas aufwendiger sind, daß es aber genauso sinnvoll sein kann, eine größere Typenvielfalt zuzulassen, wenn dafür die einzelnen Baugruppen einfacher aufgebaut sind.

Im Hinblick auf die vorstehenden Ausführungen können verschiedene Varianten sinnvoll sein. Die Ausgangseinheiten der Gruppe 42 und die der Gruppe 43 können je für sich vorhanden sein oder auch nicht. Auch wenn bereits in einer der Gruppen 42 oder 43 die ursprüngliche Folge wiederhergestellt wurde, kann es sinnvoll sein, in der nächsten Ausgangseinheit, spätestens in der Gruppe 41, nochmals dieselben die Folge kennzeichnenden Marken zu verwenden. Deshalb können auch die Eingangseinheiten der Gruppe 33 und die der Gruppe 32 je für sich vorhanden sein oder auch nicht. Die Gruppe 33 darf aber dann nicht vorhanden sein, wenn die Gruppe 42 nicht vorhanden ist; die Gruppe 32 darf nicht vorhanden sein, wenn die Gruppe 43 nicht vorhanden ist.

## Patentansprüche

1. Kopierfähige ATM-Vermittlungsstelle zur Vermittlung von ATM-Zellen, enthaltend je einen Zellkopf mit einer Wegeinformation, mit einem Hauptkoppelfeld (10), enthaltend eine Vielzahl von in mehreren Stufen angeordneten Koppelelementen, bei dem zwischen jedem Eingang und jedem Ausgang mehrere Verbindungen möglich sind und die Koppelelemente durch eine im Zellkopf enthaltene Information umschaltbar sind zwischen einer ersten Adressierungsart, bei der die Wegeinformation aufgrund eines von außen nicht beeinflußbaren Algorithmus ausgewertet wird, und einer zweiten Adressierungsart, bei der die Wegeinformation mit Hilfe einer veränderbaren Verbindungstabelle ausgewertet wird, wobei bei der zweiten Adressierungsart eine Zelle auch kopiert und auf mehreren Wegen weitergeleitet werden kann, dadurch gekennzeichnet, daß je eine Ausgangseinheit (411, 412, ..., 411) zwischen dem Hauptkoppelfeld (10) und jedem Ausgang (01, 02, ..., 01) der Vermittlungsstelle angeordnet ist, wobei jede Ausgangseinheit einen Pufferspeicher (1) enthält, in den alle über diese Ausgangseinheit auszugebenden Zellen nach dem Verlassen des Hauptkoppelfelds (10) eingeschrieben werden und aus dem die Zellen in einer Reihenfolge ausgegeben werden, die durch eine im Zellkopf enthaltene Marke (Sequence Number) zur Kennzeichnung der Reihenfolge bestimmt ist, und daß ein Kopierkoppelfeld (20) vorhanden ist, das von jedem Eingang (I1, I2, ..., Ii) der Vermittlungsstelle erreichbar ist, in dem von jeder Zelle eine bestimmte Anzahl von Kopien erstellt werden, die das Kopierkoppelfeld (20) an verschiedenen Ausgängen verlassen und dessen Ausgänge mit Eingängen des Hauptkoppelfelds (10) verbunden sind.

2. Vermittlungsstelle nach Anspruch 1, dadurch gekennzeichnet, daß die Eingänge (I1, ..., Ii) der Vermittlungsstelle über das Hauptkoppelfeld (10) mit dem Kopierkoppelfeld (20) verbunden sind.

3. Vermittlungsstelle nach Anspruch 1, dadurch gekennzeichnet, daß auch zwischen die Ausgänge des Kopierkoppelfelds (20) und die Eingänge des Hauptkoppelfelds (10) je eine Ausgangseinheit (431, ..., 43j) eingefügt ist.

4. Vermittlungsstelle nach Anspruch 1, dadurch gekennzeichnet, daß zwischen jedem Eingang (I1, ..., Ii) der Vermittlungsstelle und dem Hauptkoppelfeld (10) eine Eingangseinheit (311, ..., 31i) vorgesehen ist, in der jeder Zelle eine Marke (Sequence Number) zur Kennzeichnung der Reihenfolge beigefügt wird.

## Claims

1. An ATM exchange with copying capability for switching ATM cells each including a cell header with path information, said ATM exchange comprising a group switch (10) comprising a plurality of switching elements arranged in several stages for providing a plurality of connections between each input and each output, said switching elements being switchable, by information contained in the cell header, between a first addressing mode, in which the path information is evaluated using an algorithm which cannot be influenced from outside, and a second addressing mode, in which the path information is evaluated with the aid of an alterable connection table and in which a cell can also be copied and routed onward over a plurality of paths, characterized in that a respective output unit (411, 412, 411) is provided between the group switch (10) and each output (01, 02, ..., 01) of the exchange, each of said output units including a buffer (1) into which all cells to be outputted via said output unit are written after leaving the group switch (10), and from which the cells are outputted in an order determined by a label (sequence number) contained in the cell header, and that a copy switch (20) is provided which is accessible from each input (I1, I2, ..., Ii) of the exchange, makes a given number of copies of each cell which leave the copy switch (20) at different outputs, and has its outputs connected to inputs of the group switch (10).

2. An exchange as claimed in claim 1, characterized in that the inputs (I1, ..., Ii) of the exchange are connected to the copy switch (20) via the group switch (10).

3. An exchange as claimed in claim 1, characterized in that a respective output unit (431, 43J) is also inserted between each output of the copy switch (20) and the associated input of the group switch (10).

4. An exchange as claimed in claim 1, characterized in that a respective input unit (311, ..., 31i) is provided between each input (I1, ..., Ii) of the exchange and the group switch (10) for adding a label (sequence number) to each cell to indicate the order.

## Revendications

1. Commutateur MTA avec capacité de duplication, destiné à la commutation de cellules MTA, comportant respectivement un en-tête de cellule avec une information de cheminement, avec un réseau principal de commutation (10) comprenant plusieurs organes de commutation disposés sur plusieurs étages, dans lequel entre chaque entrée et chaque sortie, plusieurs communications sont possibles et dans lequel les organes de commutation sont commutables par une information contenue dans l'en-tête de cellule, entre un premier type d'adressage dans lequel l'information de cheminement est analysée sur la base d'un algorithme non influençable de l'extérieur, et un second type d'adressage dans lequel l'information de cheminement est analysée à l'aide d'un tableau de communications modifiable, dans le cas du second type d'adressage, une cellule pouvant être également dupliquée et transmise sur plusieurs voies, caractérisé en ce que respectivement une unité de sortie (111, 412, ..., 411) est disposée entre le réseau de commutation principal (10) et chaque sortie (01, 02, ..., 01) du commutateur, chaque unité de sortie comportant une mémoire tampon (1) dans laquelle sont enregistrées toutes les cellules devant être émises par l'intermédiaire de cette unité de sortie après avoir quitté le réseau de commutation principal (10) et à partir de laquelle les cellules sont émises dans un ordre qui est déterminé par un repère figurant dans l'en-tête de cellule (Sequence Number) et destiné à identifier l'ordre et en ce qu'il existe un réseau de commutation de duplication (20) qui peut être atteint à partir de chaque entrée (I1, I2, ..., Ii) du commutateur dans laquelle pour chaque cellule, est réalisé un nombre déterminé de duplications qui quittent le réseau de commutation de duplication (20) à des sorties différentes, les sorties de ce réseau étant reliées aux entrées du réseau de commutation principal (10).

2. Commutateur selon la revendication 1, caractérisé en ce que les entrées (l1, ..., li) du commutateur sont reliées au réseau de commutation de duplication (20) par l'intermédiaire du réseau de commutation principal (10).

3. Commutateur selon la revendication 1, caractérisé en ce qu'une unité de sortie (431, ..., 43j) est respectivement insérée entre les sorties du réseau de commutation de duplication (20) et les entrées du réseau de commutation principal (10).

4. Commutateur selon la revendication 1, caractérisé en ce que, entre chaque entrée (I1, ..., Ii) du commutateur et le réseau principal de commutation (10), il est prévu une unité d'entrée (311 ..., 31i) dans laquelle chaque cellule est associée à un repère (Sequence Number) permettant d'identifier l'ordre.
